# EUROPEAN PATENT APPLICATION

(11) **EP 4 215 765 A1**
(43) Date of publication of application: **26.07.2023**
(21) Application number: 22152853.2
(22) Date of filing: 24.01.2022
(51) Int. Cl.: F16B 25/00

(54) **SCREW WITH SUBDUCTING SCREW THREAD ELEMENT**

(71) Applicant: Hilti Aktiengesellschaft, 9494 Schaan (LI)
(72) Inventor: Schneider, Roland, 6824 Schlins (AT)
(74) Representative: Hilti Aktiengesellschaft Corporate Intellectual Property

(57) **Abstract**

Screw comprising a shank (10), wherein the shank (10) has a tip end (11), a rear end (18), and a longitudinal axis (99) extending through the tip end (11) and through the rear end (18), wherein the tip end (11) and the rear end (18) are opposite ends of the shank (10), and a screw thread element (30), which is connected to the shank (10), and which winds around the shank (10), wherein the screw thread element (30) and the shank (10) are non-monolithic with respect to one another, characterized in that the screw thread element (30) has a thread start region (38), in which an embedment depth (dₑ) of the screw thread element (30) within the shank (10) increases as the screw thread element (30) approaches the tip end (11).

## Description

The invention relates to a screw according to the preamble of claim 1. A screw of this type comprises a shank, wherein the shank has a tip end, a rear end, and a longitudinal axis extending through the tip end and through the rear end, wherein the tip end and the rear end are opposite ends of the shank, and a screw thread element, which is connected to the shank, and which winds around the shank, wherein the screw thread element and the shank are non-monolithic with respect to one another.

Screw anchors having shaft and screw thread element, respectively, made of separate components are known, for example, from EP2185829B1, US2011142569 A1, EP 3869051 A1, EP 3916245 and EP 3916246.

It is an object of the invention to provide a screw, in particularly a concrete tapping screw, which provides particularly good performance at particularly low effort, in particular manufacturing effort.

This object is achieved by a screw according to claim 1. Dependent claims refer to preferred embodiments of the invention.

According to claim 1, the screw thread element has a thread start region, in which an embedment depth, in particular radial embedment depth, of the screw thread element within the shank increases as the screw thread element approaches, in particular axially and/or helically, the tip end. Accordingly, the screw thread element penetrates the deeper into the shank the closer it reaches to the tip of the screw.

The invention is based on the finding that tapping action tends to concentrate at the thread start region of the screw thread element. Consequently, the thread start of the screw thread element often has to withstand particularly high torsional loads when the screw is installed. In view of this, it is proposed to increase, within the thread start region, the embedment depth of the screw thread element as the screw thread element approaches the tip of the screw. The resulting augmented embedment within the thread start region can provide particularly good torsional resistance in particularly easy manner, thus providing particularly good performance at particularly low effort.

The screw is in particular a tapping screw, i.e. a screw that is able to cut a mating thread in a substrate. More preferably, it can be a concrete tapping screw (which could also be referred to as a screw anchor), i.e. a screw that is able to cut a mating thread into a concrete substrate.

The screw thread element and the shank, respectively, are tightly connected, but they are non-monolithic, i.e. they are provided separately and joined afterwards. Whereas the the screw thread element and the shank could consist of the same material, they preferably consist of different materials, which allows to improve overall performance of the screw. For example, the screw thread element material could be chosen in view of high hardness and the shank material could be chosen in view of ductility. In particular, carbon steel (for indoor use) or stainless steel (for outdoor use) could be used for the screw thread element and/or the shank.

The axial length of the thread start region could typically range from 25%, inclusive, to 100%, inclusive, of the pitch of the screw thread element.

Throughout this document - wherever the terms "axially", "longitudinally", "radially" and "circumferentially" are used, they should refer, in particular, to the longitudinal axis of the shank, which is usually the longitudinal axis of the screw.

It is particularly preferred that in the thread start region, the embedment depth of the screw thread element within the shank increases continuously as the screw thread element approaches the tip end. Accordingly, there are no steps in embedment depth within the thread start region. Having a continuous increase can provide particularly good load distribution, avoid peak loads and/or improve producibility.

Advantageously, the screw thread element has a height, in particular radial height, which is generally constant within the thread start region. This can be advantageous in view of performance and/or manufacturing. Since the embedment depth of the screw thread element decreases with increasing distance from the tip end, constant height of the screw thread element implies that the thread radius and thread diameter increase with increasing distance from the tip end, preferably continuously. In particular, the screw thread element has thus a thread radius and/or thread diameter, which, respectively, decreases, more particularly continuously decrease, as the screw thread element approaches the tip end.

More preferably, the screw thread element can have a height, in particular radial height, which is generally constant throughout the screw thread element. This can further facilitate manufacturing.

As already hinted at above, the screw is preferably a concrete screw, i.e. the screw, more particular the screw thread element thereof, is able to, at least partly, cut its mating internal screw thread groove in a concrete substrate. In particular, a ratio of the outer screw thread diameter of the screw thread element to the pitch of the screw thread element can be between 1 and 2, in particular between 1,2 and 1,6, at least in some regions of the screw thread element, more preferably at least in some regions of the screw thread element located near the tip end. These are typical dimensions for concrete screws.

The invention is explained in greater detail below with reference to preferred exemplary embodiments, which are depicted schematically in the accompanying drawings. Individual features of the exemplary embodiments presented below can be implemented either individually or in any combination within the scope of the present invention.
- Figure 1: is first side view of an embodiment of a screw.
- Figure 2: is a second side view of the embodiment of figure 1.
- Figure 3: is a sectional view, including the longitudinal axis, according to H-H in figure 2, of the screw shown in figures 1 and 2.

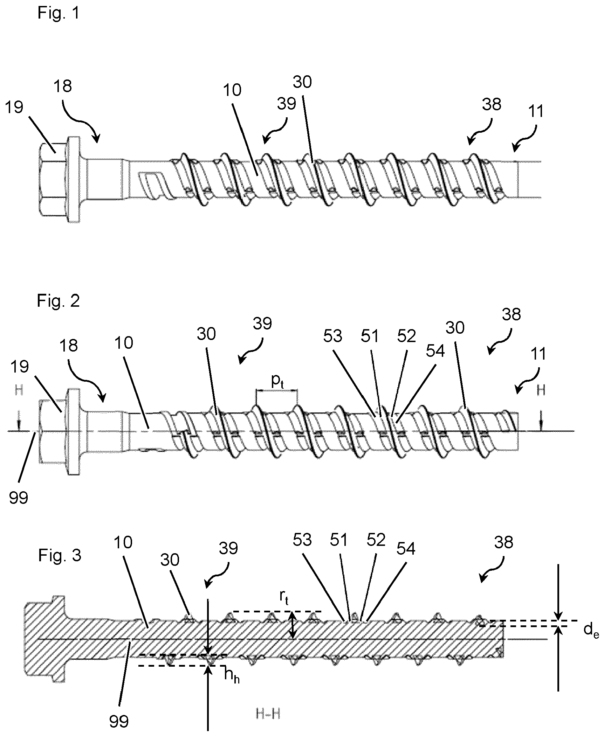

Figures 1 to 3 illustrate a first embodiment of a screw. The screw comprises an elongate, generally circular cylindrical shank 10, which has a tip end 11. The tip end 11 is the leading end of the shank 10 and the shank 10 is intended to be inserted with the tip end 11 first into a borehole when the screw is installed. The shank 10 has a generally cylindrical shape, in particular adjacent to the tip end 11. Accordingly, the shank 10 is generally non-tapered adjacent to the tip end 11.

The shank 10 also has a rear end 18, which is located opposite the tip end 11. In particular, the shank 10 can be generally circular cylindrical. The screw furthermore has a screw drive 19 that is connected to the shank 10, monolithically in the present case by way of example, for applying torque to the shank 10. In the shown embodiment, the screw drive 19 is a hex head located at the rear end 18, but this is an example only. Any other type of screw drive 19 can be used, such as an external type, for example hex, line (ALH), square, or a socket head, for example Bristol, clutch, double hex, hex socket, hexalobular socket, line (ALR), polydrive, Robertson, spline, TP3, and others. The screw drive 19 could also be located within the shank 10 and/or remote from the rear end 18, in particular if the screw is headless and/or internally threaded.

The elongate shank 10 comprises a longitudinal axis 99, extending in the longitudinal direction of the shank 10 and through both the tip end 11 and through the rear end 18.

The screw furthermore comprises a separate screw thread element 30, which is, non-monolithically, arranged on the shank 10, which winds around the shank 10 and/or the longitudinal axis 99, and which projects radially, with respect to the longitudinal axis 99, from the shank 10. In particular, the separate screw thread element 30 is arranged coaxially with respect to the longitudinal axis 99. The separate screw thread element 30 forms an external screw thread, which radially projects from the shank 10. The separate screw thread element 30 is generally helical. However, it could also deviate from a strict mathematical helix, e.g. for additional functionality

In particular, the shank 10 and/or separate screw thread element 30 consist of a metal material, preferably a steel material, most preferably a stainless steel or a carbon steel. The shank 10 and/or separate screw thread element 30 could also be provided with a respective coating, comprising one or more layers. Advantageously, the shank 10 and separate screw thread element 30, respectively, consist of different materials.

The screw thread element 30 is permanently and tightly fixed to the shank 10. In the present embodiment, this fixation is achieved by means of clamping. However, this is an example only, and other connection modes could also be used. In particular, the screw thread element 30 is fixed by means of at least one tipwardly facing clamp 51 and at least on rearwardly facing clamp 52 formed on the shank 10. The at least one tipwardly facing clamp 51 and the at least on rearwardly facing clamp 52 are preferably manufactured by deforming the shank 10, e.g. by rolling, and the shank 10 might then have corresponding grooves 53, 54.

The screw thread element 30 is embedded within the shank 10, namely within a helical groove formed within the shank 10, wherein this embedment defines an embedment depth dₑ, which is, in particular, the maximum radial embedment of the screw thread element 30 within the shank 10. Embedment depth dₑ of the screw thread element 30 within the shank 10 varies. Whereas embedment depth dₑ is generally constant in a rear region 39 of the screw thread element 30, it varies within a thread start region 38 of the screw thread element 30: In particular, in the thread start region 38 of the screw thread element 30, the embedment depth dₑ increases as the screw thread element 30 helically approaches the tip end 11 of the shank 10. Consequently, in the thread start region 38 of the shank, the screw thread element 30 subducts deeper into the shank 10 as it approaches the tip end 11. Radial height hₕ of the screw thread element 30 is generally constant within the thread start region 38. Consequently, in the thread start region 38, the thread radius rₜ of screw thread element 30 decreases as the screw thread element 30 approaches the tip end 11.

The thread start region 38 of the screw thread element 30 is located closer to the tip end 11 than is the rear region 39 of the screw thread element 30. The thread start region 38 of the screw thread element 30 forms a thread start. In the present embodiment, the thread start region 38 of the screw thread element 30 has smaller axial extension than has the rear region 39 of the screw thread element 30. In the rear region 39 of the screw thread element 30, embedment depth dₑ of the screw thread element 30, height hₕ of the screw thread element 30 and thus thread radius rₜ of screw thread element 30 are all constant.

In particular, embedment depth dₑ of the screw thread element 30, height hₕ of the screw thread element 30 and/or thread radius rₜ of screw thread element 30 can be measured radially with respect to the longitudinal axis 99.

In other embodiments, not shown here, the screw thread element 30 might have additional regions, located in front of the thread start region 38, or to the back of the rear region 39.

In some embodiments, not shown here, the screw thread element 30 might be provided with cutting serrations, in particular in the thread start region 38. In some embodiments, not shown here, the screw thread element 30 might have at least one toothing for meshing with the shank 10.

In the rear region 39 and/or in the thread start region 38 of the screw thread element 30, a ratio of the outer screw thread diameter (2 * rₜ) of the screw thread element 30 to the pitch pₜ of the screw thread element 30 is between 1 and 2, in particular between 1,2 and 1,6 in particular when screw is not installed. The screw thread element 30 can have a Vickers hardness between 500 HV10 and 800 HV10, preferably between 650 HV10 and 750 HV10, in particular both according to ISO 6507.

## Claims

1. Screw comprising
- a shank (10), wherein the shank (10) has a tip end (11), a rear end (18), and a longitudinal axis (99) extending through the tip end (11) and through the rear end (18), wherein the tip end (11) and the rear end (18) are opposite ends of the shank (10), and
- a screw thread element (30), which is connected to the shank (10), and which winds around the shank (10), wherein the screw thread element (30) and the shank are non-monolithic with respect to one another,
**characterized in that**
- the screw thread element (30) has a thread start region (38), in which an embedment depth (dₑ) of the screw thread element (30) within the shank (10) increases as the screw thread element (30) approaches the tip end (11).

2. Screw according to claim 1,
**characterized in that**
in the thread start region (38), the embedment depth (dₑ) of the screw thread element (30) within the shank (10) increases continuously as the screw thread element (30) approaches the tip end (11).

3. Screw according to any of the proceeding claims,
**characterized in that**
the screw thread element (30) has a height (hₕ) which is generally constant within the thread start region (38).

4. Screw according to any of the proceeding claims,
**characterized in that**
the screw thread element (30) has a thread radius (rt) which decreases as the screw thread element (30) approaches the tip end (11).

5. Screw according to any of the proceeding claims,
**characterized in that**
the screw is a concrete tapping screw, and/or
a ratio of the outer screw thread diameter (2 * rₜ) of screw thread element (30) to the pitch (pₜ) of the screw thread element (30) is between 1 and 2, in particular between 1,2 and 1,6, at least in some regions of screw thread element (30).
